# EUROPEAN PATENT SPECIFICATION

(11) **EP 4 680 914 B1**
(45) Date of publication and mention of the grant of the patent: **26.08.2026**
(21) Application number: 24710390.6
(22) Date of filing: 07.03.2024
(51) Int. Cl.: F41G 7/00, G09B 9/00

(54) **TRANSFER OF GAMING INFORMATION BETWEEN AIRCRAFT**
ÜBERTRAGUNG VON SPIELINFORMATIONEN ZWISCHEN FLUGZEUGEN
TRANSFERT D'INFORMATIONS DE JEU ENTRE AÉRONEFS

(30) Priority: 17.03.2023 SE 2350297
(43) Date of publication of application: 21.01.2026
(73) Proprietor: Avioniq Sweden AB, 164 51 Kista (SE)
(72) Inventor: GREV, Mikael, 191 34 SOLLENTUNA (SE); NILSSON, John-Olof, 646 91 GNESTA (SE); OHLSSON, Martin, 187 70 TÄBY (SE); SALLING, Emil, 170 69 SOLNA (SE)
(74) Representative: Noréns Patentbyrå AB
(86) International application number: PCT/EP2024/056021
(87) International publication number: WO 2024/194030

(56) References cited:
- US-A- 5 378 155
- US-A- 5 587 904
- US-A1- 2003 215 771

## Description

### Field of the invention

This invention relates to methods and systems for practicing how to avoid a missile attack in a friendly and non-hostile environment.

### Background

Several instances where fighter jets have attacked civilian airplanes are known. It is therefore important for all kinds of aircraft, civil as well as military, to be able to train how to avoid a missile attack from hostile aircraft.

In a game involving two real aircraft, a first aircraft may simulate a missile that is fired towards the second aircraft. However, often the sensor of the first aircraft cannot detect the position or velocity of the second aircraft after a while, for example because the first aircraft turns away from the second aircraft as evasive action. This makes it impossible for the first aircraft to continue the missile simulation in an efficient manner. Because of this it is difficult to simulate what happens a short time after the missile is fired, for example if a simulated fired missile will hit its target. This makes it difficult for the pilot of the targeted aircraft to practice evasive action.

US6386879 (Cubic Defense Systems Inc.) describes how tank battle can be simulated. When simulating a tank shot being fired from a cannon, the firing tank provides data including the position of the firing tank to the target tank via a laser pulse directed towards the second tank. The second tank then simulates the properties of the fired grenade. This system is not really useful for simulating a missile being fired from one airplane toward a second airplane because it is difficult for the first aircraft to direct a laser pulse to the second aircraft.

EP1737146 (SAAB AB) in a similar fashion describes the use of transferring information between players using laser and, in addition, how clocks are synchronized between players.

US5378155 describes a combat training system that includes individual processing pods on each aircraft or combat platform. The pods use signals from GPS satellites to determine the position of the respective aircraft, communicate to signal ordnance launch, and determine hits or misses based upon stored missile models. The combat training system further accommodates electronic warfare training. Jamming indicators, including real or simulated jamming signals, are transmitted by a weapons platform or its corresponding pod. The receiving platform adjusts its own real or simulated transmission based upon the received transmission signal. Calculations of hits or misses are determined by the effects of the jamming.

Further prior art can be found in FR2708117 and EP1355286.

Hence there is a need for improved methods and systems for practicing evasive action from missile attacks.

This invention solves this and other problems.

### Summary of the invention

In a first aspect of the invention there is provided a method for simulation, in a real airspace comprising first and second real aircraft, the method comprising the steps of
a) the first aircraft using a first missile simulator to initiate a first missile simulation at the first aircraft, said first missile simulation being simulated as being fired and being guided towards the second aircraft, where first aircraft uses a sensor to determine at least the direction to the second aircraft and use the direction to the second aircraft to simulate the behavior of the simulated missile, then
b) the first aircraft using the sensor of the first aircraft to detect at least the position of the second aircraft and using the position of the second aircraft to update the position and velocity of the first missile simulation,
c) the first aircraft using wireless communication means to provide the simulated position and the velocity of the simulated missile to the second aircraft,
d) the second aircraft using the information provided in step c) and a second missile simulator to initiate a second missile simulation. where the first aircraft provides the information in step c) when the first aircraft determines that the sensor of the first aircraft is not detecting the position or velocity of the second aircraft with a sufficient accuracy as determined using a predetermined sensor performance threshold, or, where the missile simulation comprises a guidance system with a homing sensor of the missile, said guidance system being arranged to guide the missile towards a target with the use of the homing sensor, and where the missile simulation can simulate that the guidance of the missile is handed over to the guidance system of the simulated missile when a condition is met and where the first aircraft provides the information in step c) when the first missile simulation simulates that guidance of the missile is handed over to the guidance system of the simulated missile.

This provides a way for the second aircraft to continue the simulation longer than with previous methods.

Further aspects can be found in the dependent claims.

In a second aspect of the invention, there is provided as system comprising a first and a second real aircraft, the first aircraft comprising a first subsystem comprising a first missile simulator and the second aircraft comprising a second subsystem comprising a second missile simulator, the first subsystem being configured to, when receiving user input, initiate a first missile simulation, said first missile simulation being simulated as being guided towards the second aircraft, where first subsystem uses a sensor to determine at least the position of the second aircraft and uses the position of the second aircraft to simulate the behavior of the simulated missile, the first subsystem being configured to use the sensor of the first aircraft to detect at least the position of the second aircraft and using the position of the second aircraft to update the position and velocity of the first missile simulation after initiating the first missile simulation,
the first subsystem further being configured to use wireless communication means to provide the simulated position and the velocity of the simulated missile to the second subsystem of the second aircraft, the second subsystem being configured to use the information provided from the first subsystem to initiate a second missile simulation
where the first subsystem is configured to use the sensor of the first subsystem to detect at least the position of the second aircraft and to use the position of the second aircraft to update the position and velocity of the first missile simulation after initiating the first missile simulation and before the position and the velocity of the simulated missile is provided the to the second subsystem,
where the first subsystem is configured to provide the position and the velocity of the simulated missile to the second subsystem when the first subsystem determines that the sensor of the first subsystem is not detecting the position or velocity of the second aircraft, or where the missile simulation comprises a guidance system with a homing sensor of the missile, said guidance system being arranged to guide the missile towards a target with the use of the homing sensor, and where the missile simulation can simulate that the guidance of the missile is handed over to the guidance system of the simulated missile when a condition is met and where the first aircraft provides the position and the velocity of the simulated missile when the first missile simulation simulates that guidance of the missile is handed over to the guidance system of the simulated missile.

### Drawings

The accompanying drawings form a part of the specification and schematically illustrate preferred embodiments of the invention, and serve to illustrate the principles of the invention.
Fig. 1 is a schematic drawing showing a system comprising two aircraft.
Fig. 2 is a flowchart that shows a method.
Figs. 3 is a schematic drawing of hardware of first subsystem.
Fig. 4 is a schematic drawing of software of first subsystem.
Fig. 5 is a schematic drawing of hardware of second subsystem.
Fig. 6 is a schematic drawing of software of second subsystem.

### Detailed description

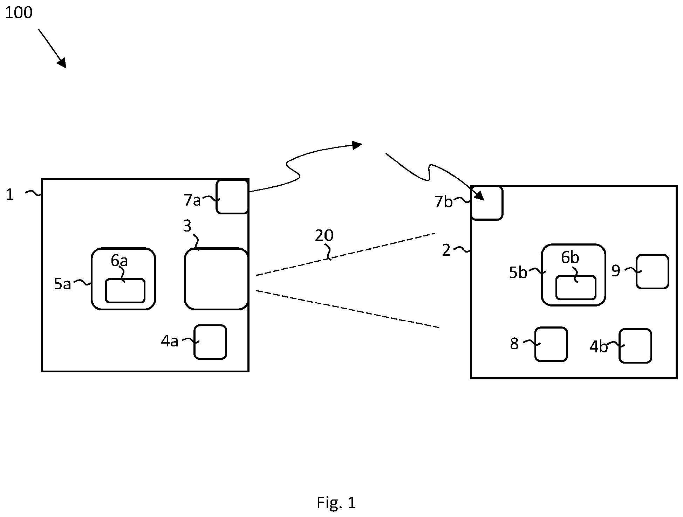

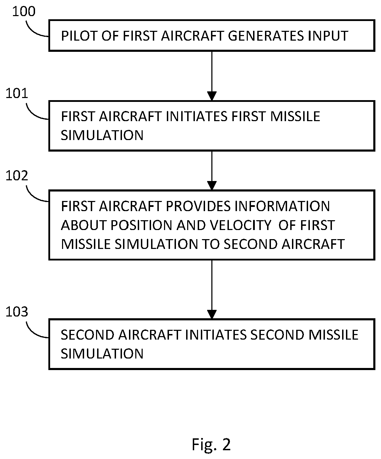

Looking at Figs. 1 and 2, the method and system 100 are intended for training of pilots in a generally friendly and non-hostile environment. A game involves at least two real aircraft of which at least one (the first aircraft 1) preferably is an aircraft that typically is capable of firing a missile against an airborne target. The second aircraft 2 may be any type of aircraft, for example a civil aircraft, such as for example a passenger aircraft. In a preferred embodiment the first and second aircraft 1,2 are fixed wing aircraft. However, in various embodiments first or second aircraft or both may be a helicopter. In a preferred embodiment the first and second aircraft 1,2 are moving in an airspace. The speed is preferably at least 500 km/h relative the ground. Both first and second aircraft 1,2 has a pilot.

First aircraft 1 comprises first subsystem 15 and second aircraft 2 comprises second subsystem 16.

The first aircraft 1 has at least one sensor 3 which is configured to detect the position and velocity of the second aircraft 2. Sensor 3 may have a field of view 20. It should be noted that "sensor" may comprise a system of sensors such as for example radar or the like. A radar may be a phased array radar such as active electronically scanned array (AESA). When it is stated that the sensor 3 is able to determine a position, it is understood that this may be done in cooperation with one or more other systems of first aircraft 1. For example a radar echo from sensor 3, when sensor 3 is a radar, may be used to determine a position using information from navigation system 4a.

Each of first and second aircraft 1, 2 has a navigation system 4a, 4b, which may for example include GPS, radar, gyros and the like for determining the position and velocity of the aircraft 1, 2 on which the navigation system 4a, 4b is located. Sensor 3 and navigation system 4a of the first aircraft 1 may work in concert to provide position data for the second aircraft 2. In addition, the navigation system 4a of the first aircraft 1 may be able to determine the position of the second aircraft 2 using data from sensor 3. The navigation systems 4a, 4b are compatible, meaning that data regarding position and velocity from the navigation system 4a of first aircraft 1 can be used by the navigation system 4b of the second aircraft 2. Navigation systems 4a, 4b will both use the same or at least compatible reference coordinate systems.

As used herein "position" refers to a position as provided in a reference coordinate system used in system 100 in three dimensions and hence comprises the altitude. Examples of suitable coordinate systems include Earth-centered, Earth-fixed coordinate system (ECEF) and latitude and longitude in combination with altitude.

The first aircraft 1 is able to simulate how a missile is fired towards the second aircraft 2 using a first missile simulator 5a which is arranged to generate or initiate a first missile simulation 6a. As is known in the art, a missile simulator 5a uses parameters from a real missile type in order to create a missile simulation 6a. The missile simulator 5ab may for example comprise information that simulates the flight characteristics, flight time and guidance system of the real missile. The missile is simulated as a guided air-to air-missile. The missile that is simulated has its own propulsion system and steering system. The missile that is simulated may change course during flight, using information about the direction to a target and preferably also position and preferably also velocity of a target (second aircraft 2). The missile may be simulated as having a guidance system, which may comprise a homing sensor of the missile. The missile may be simulated such that it is initially guided by first aircraft 1 until a condition is met and then guided by the guidance system of the missile. Hence the first missile simulation may be able to simulate "handover" from the first aircraft 1 to the missiles' own guidance system. Such a condition may be for example when the simulated missile has reached a predetermined distance from the first aircraft 1. Other conditions that may be used are: that the simulated missile 6a is able to detect the second aircraft 2 or that the simulated missile 6a is within a predetermined distance from the second aircraft 2.

The first missile simulator 5a is capable of receiving information from the sensor 3 of the first aircraft 1, which information typically comprise at least the direction or position and optionally also the velocity of the second aircraft 2. The missile simulation 6a is updated with some frequency which may be, for example, at least once per second more preferably at least 10 times per second. Updating the missile simulation 6a at least includes updating the position and velocity of the simulated missile. The missile simulation 6a is updated using information from the sensor 3. The sensor 3 may provide information with a lower frequency than the missile simulation update frequency. The missile simulator 5a will simulate how a real missile changes course for example if the second aircraft 2 takes evasive action.

The second aircraft 2 has a similar (or identical) missile simulator 5b which is configured to initiate or generate a second missile simulation 6b. First and second missile simulator 5a, 5b has stored identical required information that makes it possible for creating missile simulations 6a, 6b. In some embodiments, the second missile simulator 5b may be able to initiate or generate a second missile simulation 6b that is identical to the first missile simulation 6a. The second missile simulation 6b is simulated as being guided towards the second aircraft 2.

The first aircraft 1 and the second aircraft 2 have a wireless communication means such as wireless communication system which are configured to exchange data, typically data in digital form. The wireless communication system is preferably carried out using radio. The wireless communication system may comprise a data link between subsystems 15, 16 of first 1 and second aircraft 2. Hence each of first and second aircrafts 1, 2 has radio communication means, for example a transceiver 7a, 7b. Transceivers 7a, 7b each comprises an antenna for radio waves.

A method will now be described with reference to Fig. 2. The first aircraft 1 may use a sensor, for example sensor 3, to determine the position and optionally also the velocity of the second aircraft 2. In some embodiments, the direction to the second aircraft 2 from the first aircraft 1 is determined. When the pilot of the first aircraft a decides to fire a missile against the second aircraft 2, for example by pulling a trigger, (pilot input, step 100) the first missile simulation 6a is initiated or generated by the missile simulator 5a in step 101. No real missile is fired. The missile simulator 5a may preferably use the position and preferably also the velocity of the second aircraft 2 as detected by the sensor 3 upon initiating the first missile simulation 6a, in order to simulate how a real missile is fired and guided to intercept second aircraft 2. In some embodiments, where the position is not available, the direction to the second aircraft 2 from the first aircraft 1 or from the simulated position of the missile is used. Position and velocity of first aircraft 1 as determined by navigation system 4a is preferably also used as input when generating the missile simulation 6a, in particular the position and velocity at the time of firing. Other parameters that may be used by the missile simulator 5a for initiating the first missile simulation may include missile type, mode, target type and target information uncertainty.

The missile simulation 6a comprises a simulation of how a real missile would be guided towards the second aircraft 2. Typically, the second aircraft 2 is moving and the missile is simulated to steer towards the direction or position of the second aircraft 2 in order to hit second aircraft 2. This may be done as the position of the second aircraft 2 and the simulated missile is repeatedly updated. Hence, if the second aircraft 2 has changed its direction (course) or speed, the missile simulation 6a will be updated to steer towards the second aircraft 2 as to intercept the second aircraft 2.

After initiation of the missile simulation 6a, sensor 3 may provide information about the position and if possible, also velocity of the second aircraft 2 to the first missile simulator 5a in order to update the first missile simulation 6a. This simulates how a real aircraft may provide data to a real missile, but may, in some embodiments, also be used to simulate a guidance system of the missile. Sensor 3 may provide updated information to first simulator 5a at a predetermined frequency, which may be at least once every second. Hence update of the missile simulation 6a may be carried out at least once in the first aircraft 1 before the initiation message (step 102). Again, where the position of the second aircraft 2 is not available, the direction to the second aircraft 2 may be used.

Typically, it is desirable to provide as much information as possible about the second aircraft 2, but sometimes it is only possible for the first subsystem 15, including sensor 3, of the first aircraft 1 to determine the position and not the velocity of the second aircraft 2. In some embodiments, it is only possible to detect a direction towards the second aircraft 2 but that may in some embodiments be sufficient to initiate or update a missile model.

In step 102, the first aircraft 1 uses wireless communication means 7a to provide at least the current position and the current velocity of the simulated missile to the second aircraft 2 via wireless communications means of the second aircraft 2. This may be referred to a "initiation message" from the first aircraft 1 to the second aircraft 2. Further information such as one or more of the following may also be provided to the second aircraft 2 in the initiation message: where the missile is currently aiming (heading), the remaining energy of the simulated missile, the uncertainty of any parameter, in particular uncertainty of the position and velocity of second aircraft 2.

The initiation message may comprise a time stamp associated with the position of the simulated missile 6a. The time stamp preferably refers to a common time used in system 100, hence a common time that is used by both first and second aircraft 1, 2.

The initiation message may be triggered in various ways. In one embodiment, the initiation message is triggered when sensor 3 of the first aircraft 1 is not detecting the direction to the second aircraft 2, the position or velocity of the second aircraft 2. For example, if the first subsystem 15 decides that the performance of sensor 3 in detection the position or velocity of second aircraft 2 is below a predetermined threshold, the message may be sent. For example, when the uncertainty of the position or velocity is above a predetermined threshold. This may typically occur when the first aircraft 1 takes evasive action after firing because the range to the second aircraft 2 then typically increases. Insufficient information from sensor 3 will then be provided for the first missile simulation 6a to be updated in a proper manner.

In a different embodiment, the missile simulated by the missile simulator 5a is a missile that is guided by the first aircraft 1 to a certain point and control is then handed over to the missile itself. Step 102 may be initiated by such a handover. Simulated handover from the guidance system of the first aircraft 1 to the guidance system of the missile may trigger the initiation message.

Hence message software 72 of first subsystem may receive a trigger from various other parts of first subsystem 15, that causes message software 72 to compose and send an initiation message.

When the second aircraft 2 receives the initiation message, the second missile simulator 5b initiates the second missile simulation 6b. The second aircraft 2 which has a second missile simulator 5b, uses the information provided by the first aircraft 1, to initiate a second missile simulation 6b in step 103. The first aircraft 1 may provide sufficient information in order to make second missile simulation 6b identical to the first missile simulation 6a. The second missile simulation 6b may in some embodiments be considered to be a "clone" of the first missile simulation 6a.

Because the second aircraft 2 already has a missile simulator 5b, the initiation message can be made very short, which is an advantage.

The second aircraft 2 then preferably repeatedly updates the second missile simulation 6b. The second missile simulation 6b is simulated as being guided towards the second aircraft 2, preferably by using the simulated guidance system of the missile simulation 6b. Update will typically be made with the same frequency as the first missile simulation 6a. The second aircraft 2 may preferably provide information about its own position and velocity to the missile simulator 5b. Such information may be provided from the navigation system 4b of the second aircraft 2. The second missile simulator 5b may be updated with the position and velocity of the second aircraft 2 at a predetermined minimum frequency, which may be at least once per second. This provides continued simulation of a missile, if required up to the point of impact, even though first aircraft 1 is unable to provide data for update of a missile simulation, for example because it has taken evasive action and its sensor 3 does not detect the second aircraft 2 anymore.

In some embodiments, the missile is simulated to result in a hit or a miss of the second aircraft 2. Information about hit or miss may be provided to the pilot of the second aircraft 2 using output means of second subsystem 16.

In various embodiments, the second aircraft 2 may have a missile detection sensor 8, for example a radar, for detecting a hostile missile. In a various embodiments second aircraft 2 comprises missile detection sensor simulation software 9 for simulating missile detection sensor 8. This provides additional training to the pilot of the second aircraft 2. The missile detection sensor simulation software 9 receives data comprising position and velocity of the missile of missile simulation 6b and uses that data to determine if the missile detection sensor 8 would be able to, in real life, detect a real missile with the properties of the second missile simulation 6b. The missile detection sensor simulation software 9 may, for example, comprise a threshold that represents the detection range of the missile detection sensor 8.

If the missile detection sensor simulation software 9 determines that the missile detection sensor 8 will be able to detect a real missile with the properties of the second missile simulation 6b, the missile detection sensor simulation software 9 may issue a warning to the pilot of the second aircraft 2. The warning may for example be a flashing light or a sound,. The warning may be provided using warning means 10 such as a speaker, headphones, or indicator light or any other suitable means such as vibration. The pilot of the second aircraft 2 may then practice evasive action.

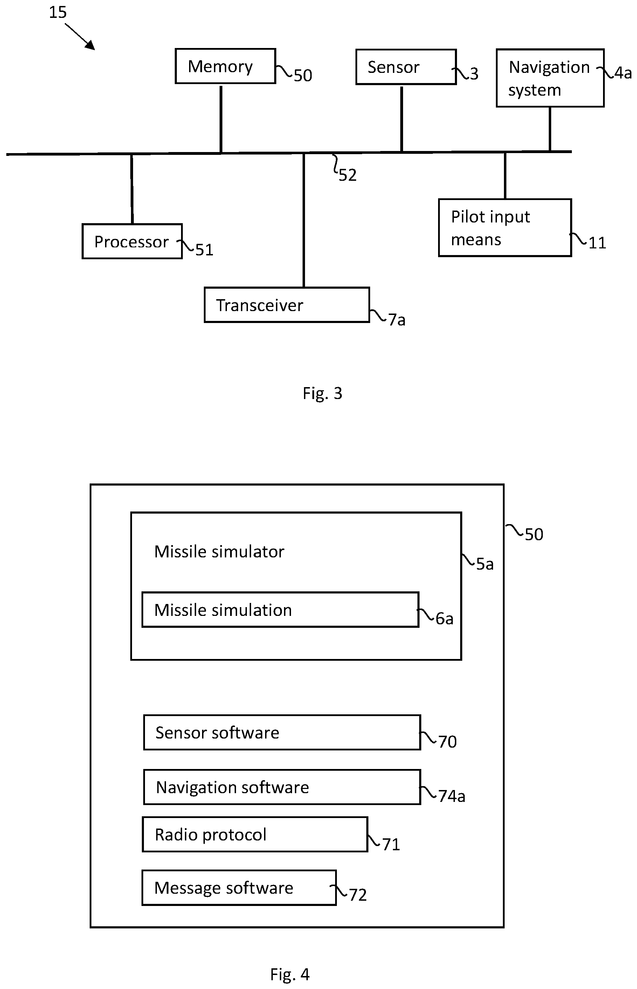

Figs. 3-6 shows examples of how to arrange components of subsystem 15 and 16. These are examples only and the skilled person understands that they can be arranged in other manners.

Fig. 3 shows a subsystem 15 of first aircraft 1. In addition to the components described above, the subsystem 10 comprises pilot input means 11 such as a trigger for firing a missile, memory 50, processor 51 and bus 52.

Fig. 4 shows various software components in first aircraft 1. In addition to the components described above, the memory 50 comprises sensor software 70 for communication with sensor 3 and providing sensor data to other components of system 100. Sensor software 70 may for example correlate information from sensor 3 to a navigation coordinate system using navigation system 4a. Radio protocol 71 is arranged to enable wireless communication between transceivers 7a, 7b. Message software 72 is arranged to compose and initiate an initiation message. Navigation software 74a works in concert with, or can be a part of, navigation system 4a.

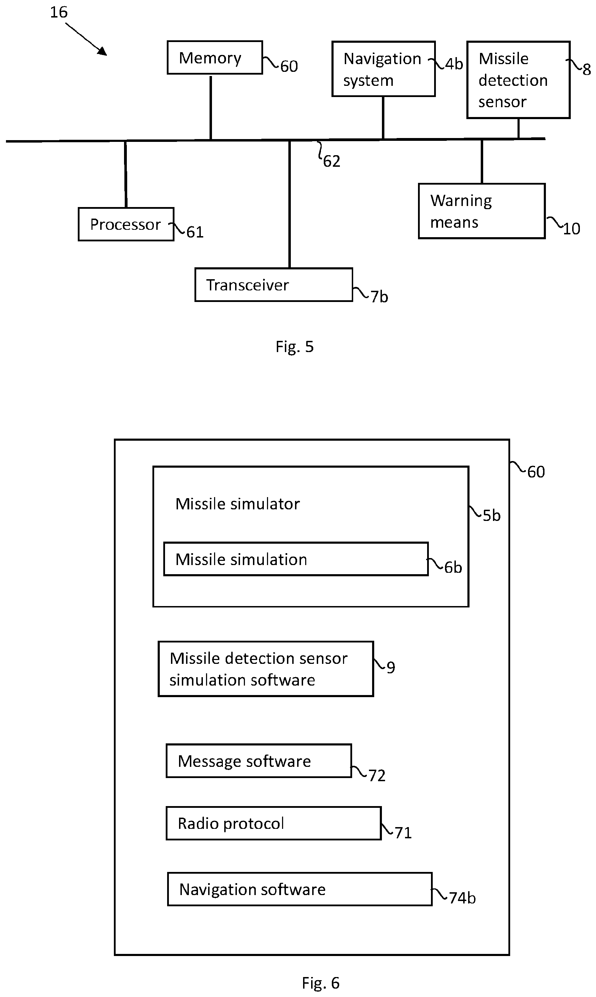

Fig. 5 shows a subsystem 16 of second aircraft 2. In addition to the components described above, the subsystem 16 comprises memory 60 processor 61 and bus 62.

Fig. 6 show various software components in second aircraft 2. Message software 72 is arranged to receive an initiation message and provide data to the missile simulator 5b, so that second missile simulation 6b can be initiated. Navigation software 74b works in concert with, or can be a part of, navigation system 4b.

It is understood that the present methods and system is partly computer-implemented, using digital computer equipment. The various embodiments and components described herein and communication between these components uses digital computer technology for storing and handling digital information and signals as well as suitable hardware and software, including for example suitable digital processors, digital memories, input means, output means, buses and communications interfaces. A user may be able to make input using for example a keyboard, a mouse or a touch screen. Output may be provided on for example a display. The various components may each have an operating system.

The methods herein can be implemented with any suitable combination of software and hardware. Any suitable programming language may be used for the software units and methods described. Data communication in system 100 and between components be implemented using suitable networking technologies and protocols. Suitable radio technologies for wireless communication and data links include VHF, HF, UHF, ACARS and CPDLC. In some embodiments a data link may involve a satellite. Data communication may be wireless, or wire bound. Information may be exchanged over a wide area net such as internet. Data communication in system 100 may be encrypted. Communication in system may be carried out using any suitable schedule.

It is realized that everything which has been described in connection to one embodiment is fully applicable to other embodiments, as compatible. Hence, the invention is not limited to the described embodiments, but can be varied within the scope of the enclosed claims. While the invention has been described with reference to specific exemplary embodiments, the description is in general only intended to illustrate the inventive concept and should not be taken as limiting the scope of the invention. The invention is generally defined by the claims.

## Claims

1. A method for simulation, in a real airspace comprising first and second real aircraft, the method comprising the steps of
a) the first aircraft using a first missile simulator to initiate a first missile simulation at the first aircraft, said first missile simulation being simulated as being fired and being guided towards the second aircraft, where first aircraft uses a sensor to determine at least the direction to the second aircraft and use the direction to the second aircraft to simulate the behavior of the simulated missile, then
b) the first aircraft using the sensor of the first aircraft to detect at least the position of the second aircraft and using the position of the second aircraft to update the position and velocity of the first missile simulation,
c) the first aircraft using wireless communication means to provide the simulated position and the velocity of the simulated missile to the second aircraft,
d) the second aircraft using the information provided in step c) and a second missile simulator to initiate a second missile simulation.
where the first aircraft provides the information in step c) when the first aircraft determines that the sensor of the first aircraft is not detecting the position or velocity of the second aircraft with a sufficient accuracy as determined using a predetermined sensor performance threshold, or, where the missile simulation comprises a guidance system with a homing sensor of the missile, said guidance system being arranged to guide the missile towards a target with the use of the homing sensor, and where the missile simulation can simulate that the guidance of the missile is handed over to the guidance system of the simulated missile when a condition is met and where the first aircraft provides the information in step c) when the first missile simulation simulates that guidance of the missile is handed over to the guidance system of the simulated missile.

2. The method of claim 1 where the second aircraft uses the position of the second aircraft as detected by a navigation system of the second aircraft to update the second missile simulation after step d).

3. The method of any one of claims 1 to 2 where in addition, the velocity of the second aircraft is determined by the sensor of the first aircraft and used by the first aircraft to initiate or update the first missile simulation.

4. The method of any one of claims 1 to 3 where the second aircraft provides data from the second missile simulation to missile detection sensor simulation software that determines if a missile detection sensor of the second aircraft is able to detect a real missile with the properties of the second missile simulation.

5. The method of claim 4 where a missile warning message is provided to a pilot of the second aircraft if the missile detection sensor simulation software determines that the missile detection sensor of the second aircraft is able to detect a real missile with the properties of the second missile simulation.

6. A system comprising first and a second real aircraft, the first aircraft comprising a first subsystem comprising a first missile simulator and the second aircraft comprising a second subsystem comprising a second missile simulator, the first subsystem being configured to, when receiving user input, initiate a first missile simulation, said first missile simulation being simulated as being guided towards the second aircraft, where first subsystem uses a sensor to determine at least the position of the second aircraft and uses the position of the second aircraft to simulate the behavior of the simulated missile, the first subsystem being configured to use the sensor of the first aircraft to detect at least the position of the second aircraft and using the position of the second aircraft to update the position and velocity of the first missile simulation after initiating the first missile simulation,
the first subsystem further being configured to use wireless communication means to provide the simulated position and the velocity of the simulated missile to the second subsystem of the second aircraft, the second subsystem being configured to use the information provided from the first subsystem to initiate a second missile simulation
where the first subsystem is configured to use the sensor of the first subsystem to detect at least the position of the second aircraft and to use the position of the second aircraft to update the position and velocity of the first missile simulation after initiating the first missile simulation and before the position and the velocity of the simulated missile is provided the to the second subsystem,
where the first subsystem is configured to provide the position and the velocity of the simulated missile to the second subsystem when the first subsystem determines that the sensor of the first subsystem is not detecting the position or velocity of the second aircraft, or where the missile simulation comprises a guidance system with a homing sensor of the missile, said guidance system being arranged to guide the missile towards a target with the use of the homing sensor, and where the missile simulation can simulate that the guidance of the missile is handed over to the guidance system of the simulated missile when a condition is met and where the first aircraft provides the position and the velocity of the simulated missile when the first missile simulation simulates that guidance of the missile is handed over to the guidance system of the simulated missile.

7. The system of claim 6 where the second subsystem is configured to use the position of the second aircraft as detected by a navigation system of the second subsystem to update the second missile simulation after the second missile simulation has been initiated.

8. The system of any one of claims 6 to 7 where in addition, the velocity of the second aircraft is determined by the sensor of the first aircraft and used by the first subsystem to initiate or update the first missile simulation.

9. The system of any one of claims 6 to 8 where the second subsystem provides data from the second missile simulation to missile detection sensor simulation software that determines if a missile detection sensor of the second aircraft is able to detect a real missile with the properties of the second missile simulation.

10. The system of claim 9 where a missile warning message is provided to a pilot of the second aircraft if the missile detection sensor simulation software determines that the missile detection sensor of the second aircraft is able to detect a real missile with the properties of the second missile simulation.

## Patentansprüche

1. Verfahren zur Simulation in einem realen Luftraum, der ein erstes und ein zweites reales Flugzeug umfasst, wobei das Verfahren die folgenden Schritte umfasst:
a) Verwenden eines ersten Lenkflugkörpersimulators durch das erste Flugzeug, um eine erste Lenkflugkörpersimulation an dem ersten Flugzeug zu initiieren, wobei die erste Lenkflugkörpersimulation so simuliert wird, als würde sie abgefeuert und auf das zweite Flugzeug gelenkt, wobei das erste Flugzeug einen Sensor verwendet, um zumindest die Richtung zu dem zweiten Flugzeug zu bestimmen, und die Richtung zu dem zweiten Flugzeug verwendet, um das Verhalten des simulierten Lenkflugkörpers zu simulieren, und anschließend
b) Verwenden des Sensors des ersten Flugzeugs durch das erste Flugzeug, um zumindest die Position des zweiten Flugzeugs zu erfassen, und Verwenden der Position des zweiten Flugzeugs durch das erste Flugzeug, um die Position und Geschwindigkeit der ersten Lenkflugkörpersimulation zu aktualisieren,
c) Verwenden von drahtlosen Kommunikationsmitteln durch das erste Flugzeug, um die simulierte Position und die Geschwindigkeit des simulierten Lenkflugkörpers an das zweite Flugzeug zu übermitteln,
d) Verwenden der in Schritt c) übermittelten Informationen und eines zweiten Lenkflugkörpersimulators durch das zweite Flugzeug, um eine zweite Lenkflugkörpersimulation zu initiieren,
wobei das erste Flugzeug die Informationen in Schritt c) bereitstellt, wenn das erste Flugzeug feststellt, dass der Sensor des ersten Flugzeugs die Position oder Geschwindigkeit des zweiten Flugzeugs nicht mit einer ausreichenden Genauigkeit erfasst, die anhand eines vorgegebenen Schwellenwerts für die Sensorleistung bestimmt wird, oder wobei die Lenkflugkörpersimulation ein Lenksystem mit einem Zielsuchsensor des Lenkflugkörpers umfasst, wobei das Lenksystem so ausgelegt ist, dass es den Lenkflugkörper unter Verwendung des Zielsuchsensors zu einem Ziel lenkt, und wobei die Lenkflugkörpersimulation simulieren kann, dass die Lenkung des Lenkflugkörpers an das Lenksystem des simulierten Lenkflugkörpers übergeben wird, wenn eine Bedingung erfüllt ist, und wobei das erste Flugzeug die Informationen in Schritt c) bereitstellt, wenn die erste Lenkflugkörpersimulation simuliert, dass die Lenkung des Lenkflugkörpers an das Lenksystem des simulierten Lenkflugkörpers übergeben wird.

2. Verfahren nach Anspruch 1, wobei das zweite Flugzeug die von einem Navigationssystem des zweiten Flugzeugs erfasste Position des zweiten Flugzeugs verwendet, um die zweite Lenkflugkörpersimulation nach Schritt d) zu aktualisieren.

3. Verfahren nach einem der Ansprüche 1 bis 2, wobei zusätzlich die Geschwindigkeit des zweiten Flugzeugs durch den Sensor des ersten Flugzeugs bestimmt und von dem ersten Flugzeug verwendet wird, um die erste Lenkflugkörpersimulation zu initiieren oder zu aktualisieren.

4. Verfahren nach einem der Ansprüche 1 bis 3, wobei das zweite Flugzeug Daten aus der zweiten Lenkflugkörpersimulation an eine Lenkflugkörpererfassungssensorsimulationssoftware übermittelt, die ermittelt, ob ein Lenkflugkörpererfassungssensor des zweiten Flugzeugs in der Lage ist, einen echten Lenkflugkörper mit den Eigenschaften der zweiten Lenkflugkörpersimulation zu erfassen.

5. Verfahren nach Anspruch 4, wobei eine Lenkflugkörperwarnmeldung an einen Piloten des zweiten Flugzeugs übermittelt wird, wenn die Lenkflugkörpererfassungssimulationssoftware feststellt, dass der Lenkflugkörpererfassungssensor des zweiten Flugzeugs in der Lage ist, einen echten Lenkflugkörper mit den Eigenschaften der zweiten Lenkflugkörpersimulation zu erkennen.

6. Ein System, das ein erstes und ein zweites reales Flugzeug umfasst, wobei das erste Flugzeug ein erstes Teilsystem umfasst, das einen ersten Lenkflugkörpersimulator umfasst, und das zweite Flugzeug ein zweites Teilsystem umfasst, das einen zweiten Lenkflugkörpersimulator umfasst, wobei das erste Teilsystem so konfiguriert ist, dass es bei Empfang einer Benutzereingabe eine erste Lenkflugkörpersimulation initiiert, wobei die erste Lenkflugkörpersimulation so simuliert wird, als würde sie auf das zweite Flugzeug gelenkt, wobei das erste Teilsystem einen Sensor verwendet, um zumindest die Position des zweiten Flugzeugs zu ermitteln, und die Position des zweiten Flugzeugs verwendet, um das Verhalten des simulierten Lenkflugkörpers zu simulieren, wobei das erste Teilsystem so konfiguriert ist, dass es den Sensor des ersten Flugzeugs verwendet, um zumindest die Position des zweiten Flugzeugs zu erfassen, und die Position des zweiten Flugzeugs verwendet, um die Position und Geschwindigkeit der ersten Lenkflugkörpersimulation nach dem Initiieren der ersten Lenkflugkörpersimulation zu aktualisieren,
wobei das erste Teilsystem ferner so konfiguriert ist, dass es drahtlose Kommunikationsmittel nutzt, um die simulierte Position und die Geschwindigkeit des simulierten Lenkflugkörpers an das zweite Teilsystem des zweiten Flugzeugs zu übermitteln, wobei das zweite Teilsystem so konfiguriert ist, dass es die von dem ersten Teilsystem übermittelten Informationen verwendet, um eine zweite Lenkflugkörpersimulation zu initiieren
wobei das erste Teilsystem so konfiguriert ist, dass es den Sensor des ersten Teilsystems verwendet, um zumindest die Position des zweiten Flugzeugs zu erfassen, und die Position des zweiten Flugzeugs verwendet, um die Position und Geschwindigkeit der ersten Lenkflugkörpersimulation nach dem Initiieren der ersten Lenkflugkörpersimulation und bevor die Position und die Geschwindigkeit des simulierten Lenkflugkörpers an das zweite Teilsystem übermittelt werden zu aktualisieren, wobei das erste Teilsystem so konfiguriert ist, dass es die Position und die Geschwindigkeit des simulierten Lenkflugkörpers an das zweite Teilsystem übermittelt, wenn das erste Teilsystem feststellt, dass der Sensor des ersten Teilsystems die Position oder Geschwindigkeit des zweiten Flugzeugs nicht erfasst, oder wobei die Lenkflugkörpersimulation ein Lenksystem mit einem Zielsuchsensor des Lenkflugkörpers umfasst, wobei das Lenksystem so ausgelegt ist, dass es den Lenkflugkörper unter Verwendung des Zielsuchsensors zu einem Ziel lenkt, und wobei die Lenkflugkörpersimulation simulieren kann, dass die Lenkung des Lenkflugkörpers an das Lenksystem des simulierten Lenkflugkörpers übergeben wird, wenn eine Bedingung erfüllt ist, und wobei das erste Flugzeug die Position und die Geschwindigkeit des simulierten Lenkflugkörpers bereitstellt, wenn die erste Lenkflugkörpersimulation simuliert, dass die Lenkung des Lenkflugkörpers an das Lenksystem des simulierten Lenkflugkörpers übergeben wird.

7. Das System nach Anspruch 6, wobei das zweite Teilsystem so konfiguriert ist, dass es die von einem Navigationssystem des zweiten Teilsystems erfasste Position des zweiten Flugzeugs verwendet, um die zweite Lenkflugkörpersimulation zu aktualisieren, nachdem die zweite Lenkflugkörpersimulation initiiert wurde.

8. Das System nach einem der Ansprüche 6 bis 7, wobei zusätzlich die Geschwindigkeit des zweiten Flugzeugs durch den Sensor des ersten Flugzeugs ermittelt, und von dem ersten Teilsystem verwendet wird, um die erste Lenkflugkörpersimulation zu initiieren oder zu aktualisieren.

9. Das System nach einem der Ansprüche 6 bis 8, wobei das zweite Teilsystem Daten aus der zweiten Lenkflugkörpersimulation an eine Lenkflugkörpererfassungssensorsimulationssoftware liefert, die ermittelt, ob ein Lenkflugkörpererfassungssensor des zweiten Flugzeugs in der Lage ist, einen echten Lenkflugkörper mit den Eigenschaften der zweiten Lenkflugkörpersimulation zu erkennen.

10. Das System nach Anspruch 9, wobei eine Lenkflugkörperwarnmeldung an einen Piloten des zweiten Flugzeugs übermittelt wird, wenn die Lenkflugkörpererfassungssensorsimulationssoftware feststellt, dass der Lenkflugkörpererfassungssensor des zweiten Flugzeugs in der Lage ist, einen echten Lenkflugkörper mit den Eigenschaften der zweiten Lenkflugkörpersimulation zu erkennen.

## Revendications

1. Procédé de simulation dans un espace aérien réel comprenant des premier et deuxième aéronefs réels, le procédé comprenant les étapes suivantes
a) le premier aéronef utilise un premier simulateur de missile pour initier une première simulation de missile au niveau du premier aéronef, ladite première simulation de missile étant simulée comme étant tirée et guidée vers le deuxième aéronef, où le premier aéronef utilise un capteur pour déterminer au moins la direction vers le deuxième aéronef, et utilise la direction vers le deuxième aéronef pour simuler le comportement du missile simulé, puis
b) le premier aéronef utilise le capteur du premier aéronef pour détecter au moins la position du deuxième aéronef, et utilise la position du deuxième aéronef pour mettre à jour la position et la vitesse de la première simulation de missile,
c) le premier aéronef utilise des moyens de communication sans fil pour fournir la position simulée et la vitesse du missile simulé au deuxième aéronef,
d) le deuxième aéronef utilise les informations fournies à l'étape c) et un deuxième simulateur de missile pour initier une deuxième simulation de missile.
où le premier aéronef fournit les informations à l'étape c) lorsque le premier aéronef détermine que le capteur du premier aéronef ne détecte pas la position ou la vitesse du deuxième aéronef avec une précision suffisante telle que déterminée à l'aide d'un seuil de performance de capteur prédéterminé, ou où la simulation de missile comprend un système de guidage doté d'un capteur de radioralliement du missile, ledit système de guidage étant agencé pour guider le missile vers une cible en utilisant le capteur de radioralliement, et où la simulation de missile peut simuler le transfert du guidage du missile au système de guidage du missile simulé lorsqu'une condition est remplie, et où le premier aéronef fournit les informations à l'étape c) lorsque la première simulation de missile simule le transfert du guidage du missile au système de guidage du missile simulé.

2. Procédé selon la revendication 1, où le deuxième aéronef utilise la position du deuxième aéronef telle qu'elle est détectée par un système de navigation du deuxième aéronef pour mettre à jour la deuxième simulation de missile après l'étape d).

3. Procédé selon l'une des revendications 1 et 2, où en outre, la vitesse du deuxième aéronef est déterminée par le capteur du premier aéronef et utilisée par le premier aéronef pour initier ou mettre à jour la première simulation de missile.

4. Procédé selon l'une des revendications 1 à 3 où le deuxième aéronef fournit des données provenant de la deuxième simulation de missile à un logiciel de simulation de capteur de détection de missile qui détermine si un capteur de détection de missile du deuxième aéronef est en mesure de détecter un missile réel présentant les propriétés de la deuxième simulation de missile.

5. Procédé selon la revendication 4 où un message d'alerte de missile est fourni à un pilote du deuxième aéronef si le logiciel de simulation de capteur de détection de missile détermine que le capteur de détection de missile du deuxième aéronef est en mesure de détecter un missile réel présentant les propriétés de la deuxième simulation de missile.

6. Système comprenant des premier et deuxième aéronefs réels, le premier aéronef comprenant un premier sous-système comprenant un premier simulateur de missile, et le deuxième aéronef comprenant un deuxième sous-système comprenant un deuxième simulateur de missile, le premier sous-système étant configuré pour, en recevant une entrée utilisateur, initier une première simulation de missile, ladite première simulation de missile étant simulée comme étant guidée vers le deuxième aéronef, où le premier sous-système utilise un capteur pour déterminer au moins la position du deuxième aéronef et utilise la position du deuxième aéronef pour simuler le comportement du missile simulé, le premier sous-système étant configuré pour utiliser le capteur du premier aéronef pour détecter au moins la position du deuxième aéronef et utiliser la position du deuxième aéronef pour mettre à jour la position et la vitesse de la première simulation de missile après l'initiation de la première simulation de missile,
le premier sous-système étant en outre configuré pour utiliser des moyens de communication sans fil pour fournir la position simulée et la vitesse du missile simulé au deuxième sous-système du deuxième aéronef, le deuxième sous-système étant configuré pour utiliser les informations fournies par le premier sous-système pour initier une deuxième simulation de missile
où le premier sous-système est configuré pour utiliser le capteur du premier sous-système pour détecter au moins la position du deuxième aéronef et pour utiliser la position du deuxième aéronef pour mettre à jour la position et la vitesse de la première simulation de missile après l'initiation de la première simulation de missile et avant que la position et la vitesse du missile simulé ne soient fournies au deuxième sous-système,
où le premier sous-système est configuré pour fournir la position et la vitesse du missile simulé au deuxième sous-système lorsque le premier sous-système détermine que le capteur du premier sous-système ne détecte pas la position ou la vitesse du deuxième aéronef, ou où la simulation de missile comprend un système de guidage doté d'un capteur de radioralliement du missile, ledit système de guidage étant agencé pour guider le missile vers une cible en utilisant le capteur de radioralliement, et où la simulation de missile peut simuler le transfert du guidage du missile au système de guidage du missile simulé lorsqu'une condition est remplie, et où le premier aéronef fournit la position et la vitesse du missile simulé lorsque la première simulation de missile simule le transfert du guidage du missile au système de guidage du missile simulé.

7. Système selon la revendication 6, où le deuxième sous-système est configuré pour utiliser la position du deuxième aéronef telle qu'elle est détectée par un système de navigation du deuxième sous-système pour mettre à jour la deuxième simulation de missile après que la deuxième simulation de missile a été initiée.

8. Système selon l'une des revendications 6 et 7, où en outre, la vitesse du deuxième aéronef est déterminée par le capteur du premier aéronef et utilisée par le premier sous-système pour initier ou mettre à jour la première simulation de missile.

9. Système selon l'une des revendications 6 à 8, où le deuxième sous-système fournit des données provenant de la deuxième simulation de missile à un logiciel de simulation de capteur de détection de missile qui détermine si un capteur de détection de missile du deuxième aéronef est en mesure de détecter un missile réel présentant les propriétés de la deuxième simulation de missile.

10. Système selon la revendication 9, où un message d'alerte de missile est fourni à un pilote du deuxième aéronef si le logiciel de simulation de capteur de détection de missile détermine que le capteur de détection de missile du deuxième aéronef est en mesure de détecter un missile réel présentant les propriétés de la deuxième simulation de missile.
